# EUROPÄISCHE PATENTSCHRIFT

(11) **EP 2 950 975 B1**
(45) Veröffentlichungstag und Bekanntmachung des Hinweises auf die Patenterteilung: **20.11.2019**
(21) Anmeldenummer: 14700264.6
(22) Anmeldetag: 09.01.2014
(51) Int. Cl.: B23P 19/00, B23K 9/20, B65G 43/02

(54) **VORRICHTUNG ZUM ZUFÜHREN VON KLEINTEILEN AN EINBAUORTEN**
DEVICE FOR BRINGING SMALL PARTS TO INSTALLATION PLACES
DISPOSITIF POUR L'AMENÉE DE PETITES PIÈCES À DES EMPLACEMENTS DE MONTAGE

(30) Priorität: 31.01.2013 DE 102013201603
(43) Veröffentlichungstag der Anmeldung: 09.12.2015
(73) Patentinhaber: Bayerische Motoren Werke Aktiengesellschaft, 80809 München (DE)
(72) Erfinder: HIRCHE, Erna-Ilse, 84478 Waldkraiburg (DE)
(86) Internationale Anmeldenummer: PCT/EP2014/050285
(87) Internationale Veröffentlichungsnummer: WO 2014/117976

(56) Entgegenhaltungen:
- EP-A1- 0 761 363

## Beschreibung

Die Erfindung bezieht sich auf eine Vorrichtung der im ersten Patentanspruch genannten Art.

Es ist allgemein bekannt, mittels Industrierobotern Kleinteile zu montieren. So werden beispielsweise in der Automobilproduktion, Massebolzen oder Befestigungsbolzen mittels Bolzenschweißung an dem Fahrzeugrohbau befestigt. Hierzu werden die Bolzen aus einer Speichereinrichtung mittels Druckluft über einen Zuführschlauch zu der Bolzenschweißeinrichtung geführt, wobei letztere üblicherweise an einem Industrieroboter befestigt ist. Da der Industrieroboter im Raum frei beweglich agiert und die Speichereinrichtung außerhalb des Bewegungsbereiches des Industrieroboters angeordnet ist, sind lange Zuführschläuche notwendig. Zuführlängen von mehreren Metern sind keine Seltenheit. Diese sind aufgrund der Beweglichkeit des Industrieroboters riss gefährdet.

Im Fall einer Beschädigung des Zuführschlauches muss der komplette Zuführschlauch ausgetauscht werden, was bei großen Schlauchlängen ein erheblicher Zeitaufwand und auch nicht unerhebliche Handlingprobleme bedeutet.

Aus der DE 102 29 690 B4 ist eine derartige Anordnung bekannt, wobei die Schlauchlänge durch Einbau eines Zwischenspeichers geteilt ist. Die eingangs angesprochene Problematik ist jedoch hier nicht angesprochen.

Aus der DE 10 2009 025 283 A1 ist eine Zuführeinrichtung mit einer Trennstelle bekannt.

Aus der DE 195 32 937 C1 ist die Zuführung von Kleinteilen bekannt, wobei die korrekte Verbindung der Verbindungselemente überwacht wird.

Aus der EP 0761363 A1, die den Oberbegriff vom Anspruch 1 offenbart, ist eine Vorrichtung zum Zuführen von zu verarbeitenden Kleinteilen zu einem Verarbeitungsgerät, insbesondere Bolzenzuführvorrichtung für ein Bolzenschweissgerät, bekannt mit einem Zuführschlauch und einer Trennstelle.

Aufgabe der vorliegenden Erfindung ist es, hier Abhilfe zu schaffen und Maßnahmen vorzuschlagen, wie bei einer Beschädigung des Zuführ- und/oder Schutzschlauches u. dessen Austausch erleichtert werden kann.

Diese Aufgabe wird durch die Merkmale des ersten Patentanspruchs gelöst. Die Unteransprüche beschreiben vorteilhafte Ausgestaltungen der Erfindung.

Die Erfindung geht von der Erkenntnis aus, dass der Zuführ- und/oder Schutzschlauch üblicherweise im Bereich der größten Bewegungen besonders riss gefährdet ist. Deshalb wird in diesem Bereich die erfindungsgemäße Trennstelle eingebaut. Damit die Trennstelle nicht ohne Abschaltung der Druckluftzufuhr und evtl. des Industrieroboters geöffnet werden kann, ist erfindungsgemäß eine Überwachungseinrichtung vorgesehen, die bei dem Versuch, den Zuführschlauch an der Trennstelle zu trennen, zumindest die Druckluftzufuhr abschaltet, so dass sicher verhindert wird, dass ein sich noch im Zuführschlauch befindlicher Bolzen beim Öffnen der Trennstelle geschoßartig austritt. Damit wird eine Verletzungsgefahr des Werkers vermieden.

Durch das geschickte Vorsehen der Trennstelle muss nur noch der Teil des Zuführschlauches ausgetaucht werden, in dem in der Regel die Beschädigung liegt. Damit werden wesentlich kürzere Schlauchlängen ausgetauscht, was auch zeitlich wesentlich schneller vonstattengeht.

In einem nicht erfindungsgemäßen Beispiel ist die Trennstelle in einem separaten geschlossenen Gehäuse angeordnet. Damit kann die Überwachungseinrichtung ebenfalls in dem Gehäuse angeordnet werden, ohne dass sie im Betrieb der Vorrichtung beschädigt wird.

Sinnvollerweise wirkt die Überwachungseinrichtung zumindest auf die Steuereinrichtung zum Zuführen der Bolzen aus und schaltet diese ab, bevor eine Trennung des Zuführschlauches möglich ist.

Die Patentansprüche 3 und 4 beschreiben Verfahren zum Betreiben der Vorrichtung.

Im Folgenden wird die Erfindung an Hand eines Ausführungsbeispieles näher erläutert.

Es stellen dar:
- Figur 1:: eine perspektivische Seitenansicht eines erfindungsgemäßen Ausführungsbeispiels mit einer geöffneten Deckplatte;
- Figur 2:: ein Beispiel mit einem geschlossenen Gehäuse.

In dem erfindungsgemäßen Ausführungsbeispiel besteht die Trennstelle 1 aus einer Grundplatte 2, die eine untere Lagerhälfte 3 trägt, in der ein Führungsteil 4 gelagert ist. Das Führungsteil 4 ist als Rohr mit jeweils an seinen Enden fest angeordneten Schlauchsteckern 5 und 6 ausgebildet. Es liegt lose in der unteren Lagerhälfte 3. Gegen Verschieben in Längsrichtung ist das Führungsteil 4 durch die Anordnung der Schlauchstecker 5 und 6 gehindert, die jeweils an der unteren Lagerhälfte 3 anliegen. Alternativ kann das Führungsteil 4 auch fest in der unteren Lagerhälfte 3 angeordnet sein.

Über die Schlauchstecker 5 und 6 werden über passsende Schlauchkupplungen 5' und 6' die Enden der Teilstücke des Zuführschlauches und/oder Schutzschlauches 7 angeschlossen. Gezeigt ist nur ein Teilstück des Zuführschlauches auf der linken Seite.

Die Schlauchkupplungen 5' und 6' sind so ausgebildet, dass sie sich einerseits leicht lösen lassen und andererseits sicher im geschlossenen Zustand halten, so dass z.B. Bolzen, Muttern oder andere Kleinteile über den Zuführschlauch und/oder Schutzschlauch 7 aus einem nicht dargestellten Speicher mit Hilfe von Transport-Druckluft zu einer Verarbeitungsstelle geführt werden können. Die Verarbeitungsstelle ist üblicherweise eine Schweißeinrichtung, gehalten von einem Industrieroboter. Es kann aber auch ein Zuführsystem für Blechmuttern oder Blechschrauben oder andere Kleinteile zu einem beweglichen Pressenwerkzeug sein.

Seitlich neben der Lagerhälfte 3 ist an der Grundplatte oder an der Lagerhälfte ein Taster 8 oder Microschalter als Überwachungseinrichtung 9 angeschraubt.

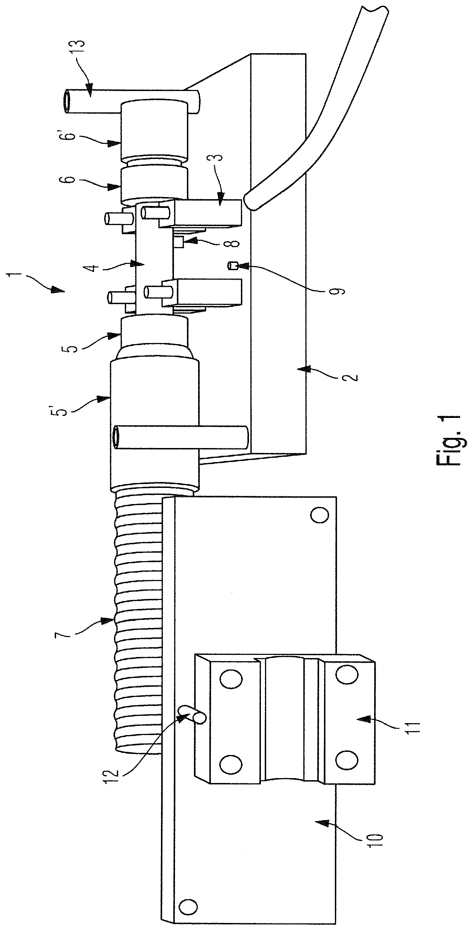

Daneben zeigt Figur 1 eine Deckplatte 10, an der ebenfalls eine obere Lagerhälfte 11 angebracht ist. Weiterhin ist an der Deckplatte 10 ein Stift 12 angebracht.

Wird die Deckplatte 10 an der Grundplatte 2 befestigt, z.B. über an der Grundplatte 2 angeordnete Schraubhülsen 13, dann bilden die beiden Lagerhälften 3 und 11 eine Lagerstelle, die das Führungsteil 4 sicher hält. Weiterhin drückt dann der Stift 12 auf den Taster 8 und schließt so den Kontakt. Damit kann ein Bolzen oder ähnliches Kleinteil durch den Zuführschlauch gefahrlos gefördert werden.

Ist nun ein Teilstück des Zuführschlauches defekt, so muss zum Abziehen der entsprechenden Schlauchkupplung 5' oder 6' zuerst die Deckplatte 10 entfernt werden. Durch das Entfernen der Deckplatte 10 wird durch den Stift 12 der Taster 8 freigegeben. Damit wird der Transport der Bolzen durch den Zuführschlauch unterbrochen, bevor noch die entsprechende Schlauchkupplung 5' oder 6' geöffnet werden kann. Anschließend kann die entsprechende Schlauchkupplung gelöst werden und das defekte Teilstück des Zuführschlauches durch ein neues Teilstück ersetzt werden, indem es mit seiner Schlauchkupplung 5' oder 6' auf den freien Schlauchstecker des Führungsteils 4 aufgeschoben und arretiert wird. Anschließend kann die Deckplatte 10 wieder montiert werden.

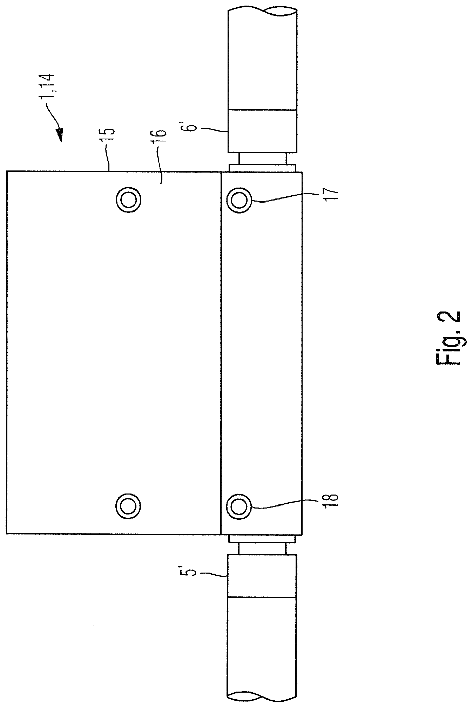

In Figur 2 ist die Trennstelle 1 in einem geschlossenen Gehäuse 14 untergebracht.

An der Gehäuseoberseite 15 ist ein Deckel 16 befestigt. Weiterhin sind auf der Gehäuseoberseite 15 zwei Schrauben 17 und 18 eingeschraubt. Diese beiden Schrauben 17 und 18 greifen in Ringnuten, die an den schlauchseitigen Schlauchkupplungen 5' und 6' eingearbeitet sind, ein.

Der Deckel 16 verschließt einen Hohlraum in dem Gehäuse 14, in dem als Überwachungseinrichtung 9 zwei Taster angeordnet sind und zwar so, dass sie jeweils die Lage der schlauchseitigen Schlauchkupplungen 5' und 6' erfassen. Die Taster sind geschlossen, wenn beide Schlauchkupplungen 5' oder 6' auf ihren Schlauchsteckern, die wiederum die Enden des Führungsteils bilden, aufgesteckt sind.

Zum Lösen einer Schlauchkupplung in Figur 2 wird die entsprechende Schraube 17 oder 18 gelöst. Damit kann das zugehörige Teilstück des Zuführschlauches und/oder Schutzschlauches mit seiner Schlauchkupplung 5' oder 6' aus dem Gehäuse 14 herausgezogen werden.

Gleichzeitig mit der Abzugsbewegung der Schlauchkupplung 5' oder 6' von dem entsprechenden Schlauchstecker des Führungsteils wird der zugehörige Taster im Gehäuse 14 geöffnet und damit der Transport der Bolzen unterbrochen, weil beispielsweise die Transport-Druckluft abgeschaltet wird. Zum Aufstecken eines neuen Teilstücks des Zuführschlauches wird in umgekehrter Reihenfolge vorgegangen.

Ein intaktes Teilstück des Zuführschlauches und/oder Schutzschlauches wird mit seiner Schlauchkupplung 5' oder 6' in das freie Ende in das Gehäuse 14 eingesteckt. Dadurch wird der zugehörige Taster geschlossen und die Transport-Druckluft eingeschaltet. Anschließend wird die zugehörige Schraube 17 oder 18 wieder angezogen, so dass die eingesteckte Schlauchkupplung 5' oder 6' gesichert ist.

Der Vorteil dieses Beispiels ist, dass keine Deckplatte entfernt werden muss, sondern lediglich eine Schraube gelöst werden muss.

## Patentansprüche

1. Vorrichtung zum Zuführen von Kleinteilen an Einbauorten zu Schweißeinrichtungen im Automobilbau, die von Robotern geführt sind, bestehend aus einem Vorratsbehälter, einem Zuführschlauch, einem Schutzschlauch (7), einer Befestigungseinrichtung und einer Druckluftzufuhr zum Transport der Kleinteile zu einer Verarbeitungsstelle,
wobei der Zuführschlauch und/oder Schutzschlauch (7) eine Trennstelle (1) aufweist, die mit einer Überwachungseinrichtung (9) versehen ist, **dadurch gekennzeichnet, dass** die Überwachungseinrichtung (9) derart eingerichtet ist, dass bei dem Versuch, den Zuführschlauch und/oder Schutzschlauch (7) an der Trennstelle zu trennen, zumindest die Druckluftzufuhr abgeschaltet wird, dass die Trennstelle (1) aus einer Grundplatte (2) und einer Deckplatte (10) mit einer Lagereinrichtung für ein Führungsteil (4) besteht, und dass die Überwachungseinrichtung (9) mit der Deckplatte (10) zusammenwirkt.

2. Vorrichtung nach Anspruch 1, **dadurch gekennzeichnet, dass** die Überwachungseinrichtung (9) mit einer Steuereinrichtung zum Zuführen der Kleinteile verbunden ist.

3. Verfahren zum Zuführen von Kleinteilen mit einer Vorrichtung nach einem der Ansprüche 1 bis 2, **dadurch gekennzeichnet, dass** die Zuführung der Kleinteile durch die Überwachungseinrichtung unterbrochen wird, bevor eine der Schlauchkupplungen von dem Führungsteil entfernt wird.

4. Verfahren zum Zuführen von Kleinteilen nach Anspruch 3, **dadurch gekennzeichnet, dass** die Zuführung der Kleinteile durch die Überwachungseinrichtung unterbrochen wird, sobald die Deckplatte entfernt wird.

## Claims

1. A device for supplying small components at installation locations to welding means in the automobile manufacturing sector which are guided by robots, consisting of a storage container, a supply hose, a protective hose (7), a fastening means and a compressed-air supply for transporting the small components to a processing point, wherein the supply hose and/or protective hose (7) has a separation point (1) which is provided with a monitoring means (9), **characterised in that** the monitoring means (9) is set up such that upon the attempt to separate the supply hose and/or protective hose (7) at the separation point, at least the compressed-air supply is switched off, that the separation point (1) consists of a baseplate (2) and a cover plate (10) with a bearing means for a guide part (4), and that the monitoring means (9) cooperates with the cover plate (10).

2. A device according to Claim 1,
**characterised in that** the monitoring means (9) is connected to a control means for supplying the small components.

3. A method for supplying small components with a device according to one of Claims 1 to 2,
**characterised in that** the supplying of the small components is interrupted by the monitoring means before one of the hose couplings is removed from the guide part.

4. A method for supplying small components according to Claim 3,
**characterised in that** the supplying of the small components is interrupted by the monitoring means as soon as the cover plate is removed.

## Revendications

1. Dispositif permettant de transférer des petites pièces à des lieux de montage vers des dispositifs de soudage dans la construction automobile qui sont guidées par des robots, constitué par un réservoir de stockage, un tuyau d'alimentation, un tuyau de protection (7), un dispositif de fixation et une alimentation en air sous pression pour permettre le transport des petites pièces vers un emplacement d'usinage,
le tuyau d'alimentation et/ou le tuyau de protection (7) comprenant un emplacement de séparation (1) qui est équipé d'un dispositif de surveillance (9),
**caractérisé en ce que**
le dispositif de surveillance (9) est réalisé de sorte que, lorsque l'on cherche à séparer le tuyau d'alimentation et/ou le tuyau de protection (7) sur l'emplacement de séparation, au moins l'alimentation en air sous pression est coupée, l'emplacement de séparation (1) est constitué par une plaque de base (2) et par une plaque de recouvrement (10) ayant un dispositif de montage d'une pièce de guidage (4), et le dispositif de surveillance (9) coopère avec la plaque de recouvrement (10).

2. Dispositif conforme à la revendication 1,
**caractérisé en ce que**
le dispositif de surveillance (9) est relié à un dispositif de commande permettant l'alimentation des petites pièces.

3. Procédé d'alimentation de petites pièces avec un dispositif conforme à l'une des revendications 1 et 2,
**caractérisé en ce que**
l'alimentation des petites pièces est interrompue par le dispositif de surveillance avant que l'un des couplages de tuyau soit extrait de la pièce de guidage.

4. Procédé d'alimentation de petites pièces conforme à la revendication 3,
**caractérisé en ce que**
l'alimentation des petites pièces est interrompue par le dispositif de surveillance dès que la plaque de recouvrement est extraite.
